# EUROPÄISCHE PATENTSCHRIFT

(11) **EP 3 112 207 B1**
(45) Veröffentlichungstag und Bekanntmachung des Hinweises auf die Patenterteilung: **20.12.2017**
(21) Anmeldenummer: 16176824.7
(22) Anmeldetag: 29.06.2016
(51) Int. Cl.: B60N 2/06, B60N 2/14, B60N 2/24

(54) **SITZ FÜR EINE BAUMASCHINE, SOWIE BAUMASCHINE**
SEAT FOR A CONSTRUCTION MACHINE, AND CONSTRUCTION MACHINE
SIEGE POUR ENGIN ET ENGIN

(30) Priorität: 02.07.2015 DE 102015212459
(43) Veröffentlichungstag der Anmeldung: 04.01.2017
(73) Patentinhaber: Hamm AG, 95643 Tirschenreuth (DE)
(72) Erfinder: Reif, Gernot, 91054 Buckenhof (DE); Hopf, Jürgen, 95643 Tirschenreuth (DE); Göhl, Thomas, 95695 Mähring (DE)
(74) Vertreter: dompatent von Kreisler Selting Werner - Partnerschaft von Patent- und Rechtsanwälten mbB

(56) Entgegenhaltungen:
- EP-A1- 1 580 066
- DE-U1-202010 015 414

## Beschreibung

Die Erfindung betrifft einen Sitz für eine Baumaschine nach dem Oberbegriff des Anspruchs 1, sowie eine Baumaschine, insbesondere eine Straßenbaumaschine mit einem derartigen Sitz.

Aus der DE 20 2010 015 414 U ist eine Baumaschine in Form einer Straßenfräsmaschine bekannt, bei der der Maschinenführersitz mit Hilfe einer Verstelleinrichtung horizontal verschiebbar ist.

Bei einem derartigen, in einer horizontalen Ebene in unterschiedliche Richtungen verschiebbaren und/oder drehbaren Sitz kann es zu unbeabsichtigten Kollisionen des Maschinenführers oder des Sitzes mit anderen Elementen der Baumaschine im Umfeld des Maschinenführers kommen.

Der Erfindung liegt daher die Aufgabe zugrunde, einen Sitz für eine Baumaschine sowie eine Baumaschine zu schaffen, bei denen die Bedienung des Sitzes verbessert ist.

Zur Lösung dieser Aufgabe dienen die Merkmale des Anspruchs 1 bzw. 15. Die Erfindung sieht in vorteilhafter Weise vor, dass bei einem querverschiebbaren Sitz eine Anschlagbegrenzungseinrichtung den maximal zulässigen Drehwinkel des Sitzes, jeweils in Abhängigkeit der eingestellten Position der seitlichen Verschiebung des Sitzes, unterschiedlich begrenzt.

Eine derartige Anschlagbegrenzungseinrichtung schafft einen variablen Anschlag, der vom aktuellen Drehwinkel des Sitzes und der eingestellten Position der seitlichen Verschiebung des Sitzes abhängig ist und damit für unterschiedliche Sitzpositionen unterschiedliche Anschläge vorsieht. Dies vereinfacht die Bedienung der Sitzverstellung, da der Fahrzeugführer dadurch von Überlegungen entbunden wird, ob bestimmte Sitzpositionen unter bestimmten Betriebssituationen der Baumaschine, z.B. bei starker Schrägstellung oder beim Bedienen anderer Maschinenelemente, z.B. beim variablen Einstellen von Lenkkonsolen oder Anzeige- und Steuerungspanels Kollisionen mit anderen Maschinenelementen auftreten können. Dies kann auch relevant sein, wenn optionale Einrichtungen der Baumaschine nachgerüstet werden und dadurch im Schwenkbereich des drehbaren Sitzes liegen können.

Die Anschlagbegrenzungseinrichtung kann als einfache Konstruktion mechanisch ausgeführt werden und bei Sitzen für Baumaschinen mit elektrischen Antrieben auch elektronisch in einfacher Weise vorgesehen werden.

Die mechanische Konstruktion ist insbesondere für preiswerte Baumaschinen geeignet, da der zusätzliche konstruktive Aufwand gering ist.

Grundsätzlich ist die Anschlagbegrenzungseinrichtung nachrüstbar.

Vorzugsweise ist vorgesehen, dass die Anschlagbegrenzungseinrichtung unterschiedlicher Anschlagpositionen für eine Links- bzw. Rechtsdrehung des Sitzes aufweist, oder elektronisch vorgibt.

Generell besteht mit der Anschlagbegrenzungseinrichtung die Möglichkeit, besondere konstruktive Eigenschaften einer individuellen Baumaschine im Falle unterschiedlichem optionalen Zubehörs, oder im Falle einer Nachrüstung von Zubehörteilen, unter bestimmte Fallkonstellationen einer Sitzposition so zu berücksichtigen, dass der Fahrzeugführer sich bei der Bedienung des Sitzes über denkbare Kollisionen, insbesondere von Kollisionen des am Sitz befestigten Steuerhebels keine Gedanken machen muss, so dass auch die Sicherheit bei der Bedienung des Sitzes erhöht wird.

Die Anschlagbegrenzungseinrichtung kann eine Anschlagkulisse sowie eine mit der Anschlagkulisse zusammenwirkende Anschlageinrichtung aufweisen. Über die Anschlagkulisse werden exakte Anschlagpositionen für die Anschlageinrichtung in Abhängigkeit der eingestellten Position der seitlichen Verschiebung des Sitzes festgelegt.

Vorzugsweise ist die Anschlagbegrenzungseinrichtung zwischen der Sitzdrehvorrichtung oder der Vorrichtung zum seitlichen Verschieben des Sitzes und der Sitzkonsole angeordnet. Grundsätzlich ist ein Teil der Anschlagbegrenzungseinrichtung, nämlich die Anschlagkulisse oder die Anschlageinrichtung an einem drehbaren Teil des Sitzes befestigt und der andere Teil (Anschlageinrichtung oder Anschlagkulisse) an einem in Querrichtung unbeweglichen Teil des Sitzes befestigt.

Es kann vorgesehen sein, dass die Anschlagkulisse durch eine Kontur gebildet ist, gegen die die Anschlageinrichtung in Abhängigkeit von der seitlichen Position und von der aktuellen Sitzdrehposition an unterschiedlichen Stellen zum Begrenzen des Drehwinkels des Sitzes anschlägt. Die Kontur begrenzt dabei die Schwenkbewegung der Anschlageinrichtung, die vorzugsweise mit einem drehbaren Teil des Sitzes gekoppelt ist.

Die Kontur der Anschlagkulisse kann zumindest eine Begrenzungslinie für die Linksdrehung und eine weitere Begrenzungslinie für die Rechtsdrehung aufweisen.

Es versteht sich dabei, dass diese Begrenzungslinien nicht linear verlaufen müssen oder beispielsweise auch aus mehreren linearen Abschnitten bestehen können.

Eine bevorzugte Lösung sieht vor, dass die Anschlagkulisse mit der Sitzkonsole und die Anschlageinrichtung mit dem drehbaren Teil des Sitzes gekoppelt sind. Vorzugsweise ist vorgesehen, dass die Anschlageinrichtung mindestens einen Anschlagbolzen aufweist, der zur Begrenzung des Drehwinkels des Sitzes an der Kontur der Anschlagkulisse anliegt, wenn der Sitz in eine der beiden Drehrichtungen gedreht wird.

Die Sitzdrehvorrichtung kann eine Drehkonsole mit einem Drehteller aufweisen, auf dem eine Sitzplatte des Sitzes koaxial zur Drehachse des Drehtellers starr oder exzentrisch drehbar zu dem Drehteller befestigt ist.

Bei einer bevorzugten Weiterbildung ist vorgesehen, dass die Kontur der Anschlagkulisse in oder auf einer Zwischenplatte ausgebildet ist, in die die Anschlageinrichtung eingreift. Die Kontur kann dabei in die Zwischenplatte eingearbeitet sein oder beispielsweise aus einem hochstehenden Rand gebildet sein, gegen den die Anschlageinrichtung im Falle der Drehwinkelbeschränkung anliegen kann.

An der Sitzkonsole kann eine Vorrichtung zum Verschieben des Sitzes in Fahrtrichtung der Baumaschine angeordnet sein. Diese Längsverstellungseinrichtung ist beispielsweise zwischen der Sitzkonsole und der Anschlagbegrenzungseinrichtung angeordnet.

Bei einem bevorzugten Ausführungsbeispiel ist vorgesehen, dass die Vorrichtungen zum Verschieben des Sitzes in Fahrtrichtung bzw. in Querrichtung jeweils Führungselemente aus mindestens zwei zusammenwirkenden Teilen aufweisen, von denen jeweils ein Teil ortsfest an der Zwischenplatte und der jeweils andere Teil an der Sitzkonsole bzw. der Sitzdrehvorrichtung ortsfest befestigt ist.

Hierzu kann vorgesehen sein, dass der ortsfest an der Zwischenplatte befestigte Teil der Vorrichtung zum Verschieben des Sitzes in Fahrtrichtung auf der Unterseite der Zwischenplatte und dass der ortsfest an der Zwischenplatte befestigte Teil der Vorrichtung zum seitlichen Verschieben des Sitzes auf der Oberseite der Zwischenplatte befestigt ist.

Bei einem bevorzugten Ausführungsbeispiel ist die Kontur der Anschlagkulisse durch eine Aussparung in der Zwischenplatte gebildet.

Bei einer elektronischen Ausführung der Anschlagbegrenzungseinrichtung ist vorgesehen, den Drehwinkel des Sitzes und die eingestellte Position der seitlichen Verschiebung des Sitzes mit Sensoren zu erfassen. Dabei kann aus einem Speicher der Datenbank in Abhängigkeit von dem Drehwinkel und der Verschiebeposition ein maximal zulässiger Drehwinkel des Sitzes in beide Drehrichtungen ausgelesen werden und der aktuelle Drehwinkel des Sitzes mit einer auf die Sitzdrehvorrichtung einwirkenden elektronisch ansteuerbaren Sperreinrichtung begrenzt werden. Die in dem Speicher hinterlegten Daten für den maximal zulässigen Drehwinkel in beide Drehrichtungen des Sitzes können empirisch und individuell ermittelt werden und in dem Speicher abgelegt werden. Die Sperreinrichtung kann aus einer üblichen Arretiereinrichtung für die Sitzdrehung bestehen, die elektrisch betätigbar und von der elektronischen Anschlagbegrenzungseinrichtung entsprechend angesteuert werden kann. Generell kann die Sitzdrehung bei einer von einem Hubmagneten betätigten Arretiereinrichtung auf Knopfdruck gesperrt oder entsperrt werden.

Die Erfindung betrifft desweiteren eine Baumaschine, insbesondere eine Straßenbaumaschine, wie beispielsweise eine Straßenfräsmaschine oder eine Straßenwalze mit einem Sitz, wie er zuvor beschrieben ist.

Im Folgenden werden unter Bezugnahme auf die Zeichnungen Ausführungsbeispiele der Erfindung näher erläutert.

Es zeigen:
- Fig. 1: eine Straßenbaumaschine in Form einer Straßenwalze, und
- Fign. 2a, 2b, 2c: einen erfindungsgemäßen Sitz in perspektivischer Explosionsdarstel-lung.

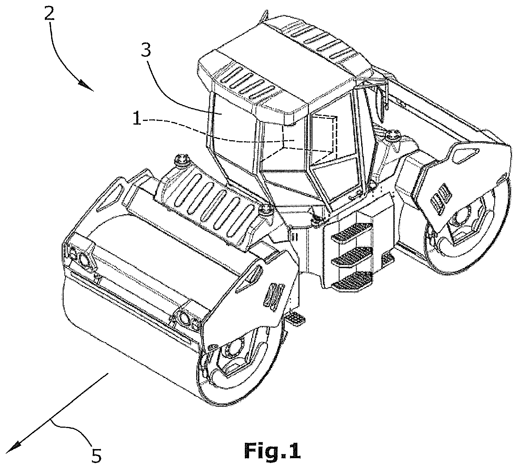

Fig. 1 zeigt eine Baumaschine in Form einer Straßenbaumaschine, und zwar eine Straßenwalze mit einer Fahrerkabine 3, in der sich ein querverschieblicher und drehbarer Sitz 1 befindet.

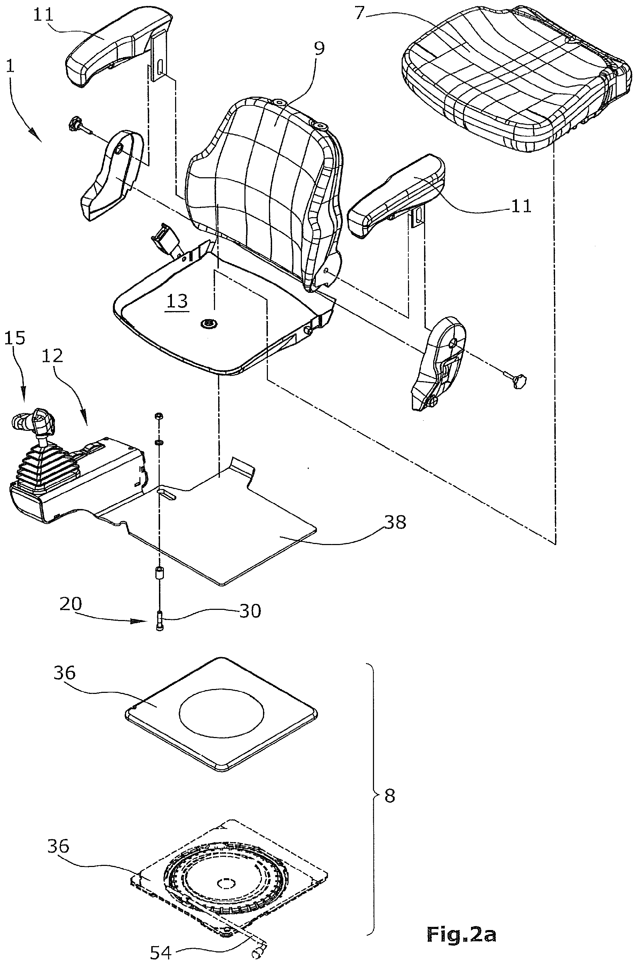

Der Sitz 1 ist in den Fign. 2a bis 2c in einer perspektivischen Explosionsdarstellung im Einzelnen dargestellt.

Der Sitz 1 weist in herkömmlicher Weise eine Sitzfläche 7, die auf einer Sitzschale 13 montiert sein kann, sowie eine Rückenlehne 9 und zwei Armlehnen 11 auf.

Die Sitzfläche 7 ist mit der Sitzschale 13 auf einer Sitzplatte 38 befestigt, die vorzugsweise auf der rechten Seite in Verlängerung der Armlehne 11 eine Steuerungseinheit 12 mit einem Steuerhebel 15 aufweist. Der Fahrzeugführer kann somit mit einem auf der Armlehne aufgestützten Arm die Steuerungseinheit 12 bedienen.

Die Sitzplatte 38, die grundsätzlich auch einstückig mit der Sitzschale 13 sein könnte, ist ihrerseits an einer Sitzdrehvorrichtung 8 auf einem Drehteller 36 der Sitzdrehvorrichtung 8 befestigt. Die Drehkonsole 34 der Sitzdrehvorrichtung 8 weist als Sperreinrichtung 54 eine Ver- und Entriegelungseinrichtung auf, die manuell bedienbar ist oder in einer elektrischen Ausführung des Sitzes mit einem Hubmagneten per Druckknopf ver- oder entriegelt werden kann.

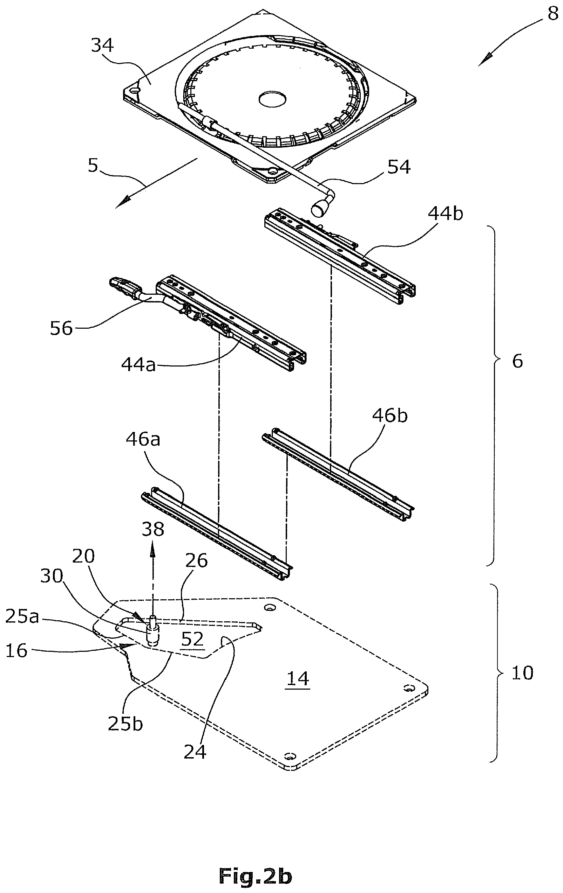

Die Darstellung auf der Fig. 2b schließt sich vertikal nach unten an die Darstellung in Fig. 2a an und wiederholt zunächst die Darstellung der Drehkonsole 34, die in Fig. 2a gestrichelt dargestellt ist.

Die sich nicht mit den schwenkbaren Sitzelementen drehende Drehkonsole 34 ist mit einer Vorrichtung 6 zum seitlichen Verschieben des Sitzes 1 in Querrichtung zur auch in Fig. 1 dargestellten Fahrtrichtung 5 der Baumaschine 2 verbunden.

Die Vorrichtung 6 zum seitlichen Verschieben des Sitzes 1 weist Führungselemente 44a, 44b und 46a und 46b auf, die beispielsweise aus Schienenelementen gebildet sind, wobei jeweils zwei Schienenelemente in Form der Führungselemente 44a, 46a bzw. 44b und 46b in bekannter Weise zusammenwirken, um eine Querverschiebung des oberen Sitzteils relativ zu einer Sitzkonsole 4 zu ermöglichen.

Vorzugsweise weist das vordere obere Führungselement 44a eine einrastbare Sperreinrichtung 56 auf, die in einer elektrifizierten Ausführungsform auch per Hubmagnet und Druckschalter betätigbar ist.

Die unteren Führungselemente 46a, 46b sind auf einer Zwischenplatte 14 befestigt, die Bestandteil einer mechanischen Anschlagbegrenzungseinrichtung 10 ist.

Die mechanische Anschlagbegrenzungseinrichtung 10 weist eine Aussparung 52 auf, die eine Anschlagkulisse 16 bildet, die mit einer Anschlageinrichtung 20, z.B. in Form eines Anschlagbolzens 30 zusammenwirkt, um eine Anschlagbegrenzung für den maximal zulässigen Drehwinkel des drehbaren Teils des Sitzes zu ermöglichen. Die Anschlagvorrichtung 20 in Form eines Anschlagbolzens 30 ist an einem drehbaren Teil des Sitzes 1 befestigt, und zwar vorzugsweise seitlich an der Sitzplatte 38 auf der der Steuerungseinheit 12 zugewandten Seite.

Es versteht sich, dass die Anschlageinrichtung 20 auch anderer Stelle an einem drehbaren Element des Sitzes 1 befestigt sein kann, und dass die zugehörige Anschlagkulisse 16 an die Positionierung der Anschlageinrichtung 20 angepasst ist.

Die Anschlagkulisse 16 kann beispielsweise auch in Form eines hochstehenden Randes gebildet sein. Wesentlich ist, dass die Anschlageinrichtung 20 aufgrund der Drehbewegung des Sitzes 1 und der Querverschiebung des Sitzes mit unterschiedlichen Anschlagpositionen der Anschlagkulisse 16 zusammenwirken kann.

So hat die Anschlagkulisse 16 mit einer Kontur die, wie in Fig. 2b dargestellt, durch eine Aussparung 52 gebildet ist, Begrenzungslinien 25a, 25b für eine Drehung des drehbaren Teils des Sitzes 1 nach links und eine Begrenzungslinie 26 für die Drehung nach rechts. Form und Verlauf dieser Begrenzungslinien 25a, 25b, 26 können individuell an die Erfordernisse einer individuell ausgestatteten Baumaschine 2 angepasst sein.

Sollten beispielsweise zu einem späteren Zeitpunkt optionale Komponenten an einer Baumaschine 2 nachgerüstet werden, die in einer der möglichen Positionen des Sitzes 1 eine Kollision mit dem Maschinenführer oder mit Elementen des Sitzes 1, insbesondere dem Steuerhebel 15, verursachen könnten, besteht die Möglichkeit, durch einfachen Austausch der Zwischenplatte 14 sich an die veränderten Gegebenheiten anzupassen.

Bei einer elektronischen Anschlagbegrenzungseinrichtung weist die Sitzdrehvorrichtung 8 einen Drehwinkelsensor auf, der beispielsweise an der Drehkonsole 34 befestigt sein kann, um die Drehposition zu detektieren, sowie einen Wegsensor an der Vorrichtung 6 zum seitlichen Verschieben des Sitzes, um die Querverschiebungsposition des Sitzes zu detektieren. Die Messwerte für den aktuellen Drehwinkel und die aktuelle Verschiebeposition des verschiebbaren Teils des Sitzes ermöglichen, maximal zulässige Drehwinkel aus einer in einem Speicher hinterlegten Datenbank auszulesen, so dass für jede Querverschiebungsposition ein maximaler Drehwinkel für eine Links- oder eine Rechtsdrehung ausgelesen werden kann. Bei Erreichen der maximal zulässigen Drehwinkelposition kann eine von der elektrischen Anschlagbegrenzungseinrichtung z.B. elektromagnetisch aktivierbare Sperreinrichtung 54 eine weitere Drehbewegung des Sitzes 1 blockieren.

Bei einer elektrischen Anschlagbegrenzung besteht auch die Möglichkeit, wenn eine Anschlagsituation vorliegt und eine weitere Drehung oder eine weitere Sitzquerverschiebung erwünscht ist, dass ein Linearantrieb für die Querverschiebung oder ein Drehantrieb für die Sitzvorrichtung derart aktiviert wird, dass im Falle einer Drehwinkelüberschreitung der Sitz automatisch querverschoben wird, und dass im Falle einer Überschreitung des Anschlaggrenzwertes für die Querverschiebung der Sitz automatisch zurückgedreht wird, so dass der Sitz stets im erlaubten Positionsbereich verbleibt.

Bei einer mechanischen Anschlagbegrenzungsvorrichtung müssen zu diesem Zweck lediglich beide Sperrvorrichtungen entriegelt werden und in der entriegelten Position gehalten werden, damit der Sitz innerhalb des durch die Anschlagkulisse vorgegebenen Bereichs frei bewegt werden kann.

Es kann auch vorgesehen sein, dass die Sperreinrichtungen 54 und 56 in dem Moment, in dem der Sitz 1 nicht mehr bewegt wird, selbsttätig verriegeln.

Alternativ kann jede einzelne Sperreinrichtung 54, 56 separat manuell verriegelt werden.

Es versteht sich, dass bei einer elektronischen Anschlagbegrenzungseinrichtung die Zwischenplatte 14 und der Anschlagbolzen 30 nicht erforderlich sind.

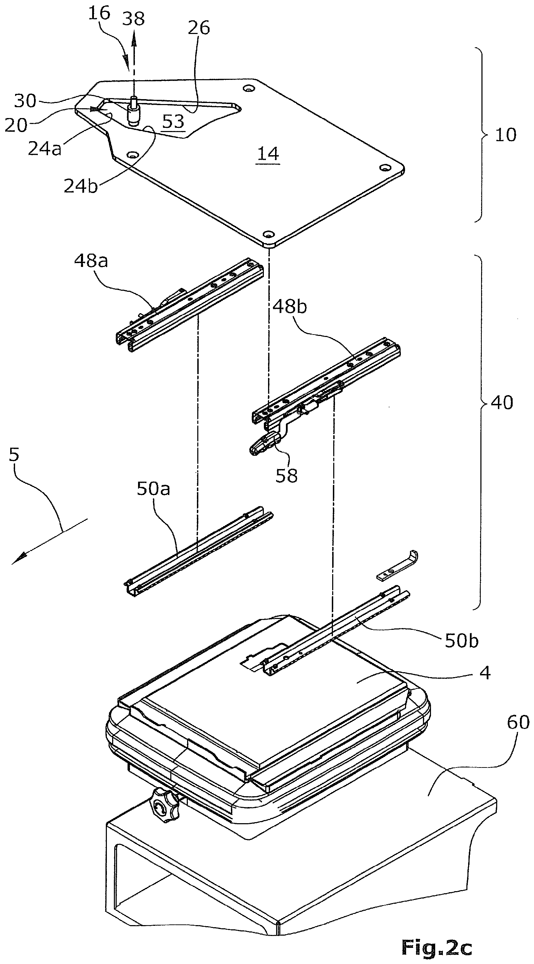

Fig. 2c schließt sich vertikal nach unten an Fig. 2b an, wobei wiederum die mechanische Anschlagbegrenzungseinrichtung 10 aus Fig. 2b erneut dargestellt ist.

In Fig. 2c sind an der Unterseite der Zwischenplatte 14 Führungselemente 48a und 48b einer Vorrichtung 40 zum Verschieben des Sitzes 1 in Fahrtrichtung befestigt. Diese Führungselemente 48a und 48b kooperieren mit komplementären Führungselementen 50a, 50b die ihrerseits an der Sitzkonsole 4 ortsfest befestigt sind. Die aus Schienenteilen gebildeten Führungselemente 48a, 48b, 50a, 50b erlauben die Längsverstellung des Sitzes 1 parallel zur Fahrtrichtung 5 in herkömmlicher Weise. Eine Sperreinrichtung 58 zum Ver- und Entriegeln der Längsverstellung ist vorzugsweise an dem Führungselement 48b angeordnet.

Die Sitzkonsole 4 kann unmittelbar an dem Maschinenrahmen der Baumaschine befestigt sein, oder sich auf einem Maschinenrahmen der Baumaschine 2 verbundenen Podest 60 befestigt sein.

Im praktischen Betrieb greift das Ausführungsbeispiel der Fig. 2 die Anschlageinrichtung 20 in Form eines vertikal nach unten von der Sitzplatte 38 abstehenden Anschlagbolzens 30 in die Aussparung 52 der Zwischenplatte 14 ein. Bei einer Querverschiebung des beweglichen Teils des Sitzes 1 wird der Anschlagbolzen 30 demzufolge innerhalb der Aussparung 52 gemeinsam mit dem Sitz 1 in Querrichtung zur Fahrtrichtung 5 verschoben. In der jeweiligen eingestellten Querverschiebungsposition des Sitzes 1 können nun je nach Sitzposition unterschiedliche Anschlagflächen auf der Anschlagkulisse 16 mit dem Anschlagbolzen 30 zusammenwirken, so dass je nach Sitzposition unterschiedliche maximal zulässige Drehwinkel des Sitzes 1 aus dem Zusammenspiel der Anschlagkulisse 16 und dem Anschlagbolzen 30 vorgegeben werden können.

## Patentansprüche

1. Sitz (1) für eine Baumaschine (2), mit einer Sitzkonsole (4), einer Vorrichtung (6) zum seitlichen Verschieben des Sitzes (1) in Querrichtung zur Fahrtrichtung (5) der Baumaschine, und mit einer Sitzdrehvorrichtung (8),
**dadurch gekennzeichnet,dass**
eine Anschlagbegrenzungseinrichtung (10) den maximal zulässigen Drehwinkel des Sitzes (1) jeweils in Abhängigkeit der eingestellten Position der seitlichen Verschiebung des Sitzes (1) unterschiedlich begrenzt.

2. Sitz nach Anspruch 1, **dadurch gekennzeichnet, dass** die Anschlagbegrenzungseinrichtung unterschiedliche Anschlagpositionen (10) für eine Links- bzw. Rechtsdrehung des Sitzes (1) aufweist oder elektronisch vorgibt.

3. Sitz nach Anspruch 1 oder 2, **dadurch gekennzeichnet, dass** die Anschlagbegrenzungseinrichtung (10) eine Anschlagkulisse (16) sowie eine mit der Anschlagkulisse (16) zusammenwirkende Anschlageinrichtung (20) aufweist.

4. Sitz nach Anspruch 3, **dadurch gekennzeichnet, dass** die Anschlagbegrenzungseinrichtung (10) zwischen der Sitzdrehvorrichtung (8) oder der Vorrichtung (6) zum seitlichen Verschieben des Sitzes (1) und der Sitzkonsole (4) angeordnet ist.

5. Sitz nach Anspruch 3 oder 4, **dadurch gekennzeichnet, dass** die Anschlagkulisse (16) durch eine Kontur (24) gebildet ist, gegen die die Anschlageinrichtung (20) in Abhängigkeit von der seitlichen Sitzposition und von der aktuellen Sitzdrehposition an unterschiedlichen Stellen bei einer Begrenzung des Drehwinkels des Sitzes (1) anschlägt.

6. Sitz nach Anspruch 5, **dadurch gekennzeichnet, dass** die Kontur (24) der Anschlagkulisse (16) zumindest eine Begrenzungslinie (25a, 25b) für die Linksdrehung und eine Begrenzungslinie (26) für die Rechtsdrehung aufweist.

7. Sitz nach einem der Ansprüche 3 bis 6, **dadurch gekennzeichnet, dass** die Anschlagkulisse (16) mit der Sitzkonsole (4) und die Anschlageinrichtung (20) mit dem drehbaren Teil des Sitzes (1) gekoppelt ist.

8. Sitz nach einem der Ansprüche 5 bis 7, **dadurch gekennzeichnet, dass** die Kontur (24) der Anschlagkulisse (16) in oder auf einer Zwischenplatte (14) ausgebildet ist, in die die Anschlageinrichtung (20) eingreift.

9. Sitz nach einem der Ansprüche 1 bis 8, **dadurch gekennzeichnet, dass** an der Sitzkonsole (4) eine Vorrichtung (40) zum Verschieben des Sitzes in Fahrtrichtung (5) der Baumaschine (2) zwischen der Anschlagbegrenzungseinrichtung (10) und der Sitzkonsole (4) angeordnet ist.

10. Sitz nach Anspruch 9, **dadurch gekennzeichnet, dass** die Vorrichtungen (6, 40) zum Verschieben des Sitzes in Fahrtrichtung (5) bzw. in Querrichtung jeweils Führungselemente (44a, 44b, 46a, 46b; 48a, 48b, 50a, 50b) aus mindestens zwei zusammenwirkenden Teilen aufweisen, von denen jeweils ein Teil (46a, 46b; 48a, 48b) ortsfest an der Zwischenplatte (14) und das jeweils andere Teil (44a, 44b; 50a, 50b) an der Sitzkonsole (4) bzw. an der Sitzdrehvorrichtung (8) ortsfest befestigt ist.

11. Sitz nach Anspruch 10, **dadurch gekennzeichnet, dass** der ortsfest an der Zwischenplatte (14) befestigte Teil (48a, 48b) der Vorrichtung (40) zum Verschieben des Sitzes (1) in Fahrtrichtung (5) auf der Unterseite der Zwischenplatte (14) und dass der ortsfest an der Zwischenplatte (14) befestigte Teil (46a, 46b) der Vorrichtung (6) zum seitlichen Verschieben des Sitzes (1) auf der Oberseite der Zwischenplatte (14) befestigt ist.

12. Sitz nach Anspruch 8, **dadurch gekennzeichnet, dass** die Kontur (24) der Anschlagkulisse (16) durch eine Aussparung (52) in der Zwischenplatte (14) gebildet ist.

13. Sitz nach Anspruch 1 oder 2, **dadurch gekennzeichnet, dass** die Anschlagbegrenzungseinrichtung (10) den Drehwinkel des Sitzes (1) und die eingestellte Position der seitlichen Verschiebung des Sitzes (1) mit Sensoren erfasst, und den aus einem Speicher in Abhängigkeit von dem Drehwinkel und der Verschiebeposition auslesbaren maximal zulässigen Drehwinkel des Sitzes (1) in beide Drehrichtungen mit einer auf die Sitzdrehvorrichtung (8) einwirkenden elektronisch ansteuerbaren Sperreinrichtung (54) begrenzt.

14. Sitz nach Anspruch 13, **dadurch gekennzeichnet, dass** die Anschlagbegrenzungseinrichtung für den Fall, dass der Sitz (1) über eine Anschlagbegrenzung hinaus gedreht oder querverschoben werden soll, einen Linearantrieb für die Vorrichtung (6) zum seitlichen Verschieben des Sitzes oder einen Drehantrieb für die Sitzdrehvorrichtung (8) derart ansteuert, dass im Falle einer gewünschten über den Anschlag hinausgehenden Drehung der Sitz (1) automatisch querverschiebbar ist und im Falle einer gewünschten Überschreitung eines Anschlags für eine Querverschiebung der Sitz (1) automatisch zurückdrehbar ist, so dass der Sitz (1) stets im zulässigen, durch die Anschlagbegrenzungseinrichtung vorgegebenen Positionsbereich verbleibt.

15. Baumaschine, insbesondere Straßenbaumaschine, mit einem Sitz nach einem der Ansprüche 1 bis 14.

## Claims

1. A seat (1) for a construction machine (2), comprising a seat console (4), a device (6) for lateral displacement of the seat (1) in a transverse direction relative to the direction of travel (5) of the construction machine, and a seat rotating device (8),
**characterized in that**
a stop limiter device (10) is operative to limit the maximum allowable rotational angle of the seat (1) in a variable manner, each time in dependence on the set position of the lateral displacement of the seat (1).

2. The seat according to claim 1, **characterized in that** the stop limiter device comprises or electronically predefines different stop positions (10) for rotation of the seat (1) to the left and to the right, respectively.

3. The seat according to claim 1 or 2, **characterized in that** the stop limiter device (10) comprises a slotted stopper guide (16) and a stopper device (20) cooperating with the slotted stopper guide (16).

4. The seat according to claim 3, **characterized in that** the stop limiter device (10) is arranged between the seat rotating device (8) or the device (6) for lateral displacement of the seat (1) and the seat console (4).

5. The seat according to claim 3 or 4, **characterized in that** the slotted stopper guide (16) is formed by a contour (24) to be abutted by the stopper device (20) at different sites in dependence on the lateral seat position and the current seat rotational position in case of a limitation of the rotational angle of the seat (1).

6. The seat according to claim 5, **characterized in that** the contour (24) of the slotted stopper guide (16) comprises at least a limiting line (25a,25b) for left-hand rotation and a limiting line (26) for right-hand rotation.

7. The seat according to any one of claims 3 to 6, **characterized in that** the slotted stopper guide (16) is coupled to the seat console (4) and the stopper device (20) is coupled to the rotatable part of the seat (1).

8. The seat according to any one of claims 5 to 7, **characterized in that** the contour (24) of the slotted stopper guide (16) is formed in or on an intermediate plate (14), with the stopper device (20) engaging into said intermediate plate.

9. The seat according to any one of claims 1 to 8, **characterized in that** the seat console (4) has arranged on it, between the stop limiter device (10) and the seat console (4), a device (40) for displacing the seat in the direction of travel (5) of the construction machine (2).

10. The seat according to claim 9, **characterized in that** said devices (6,40) for displacing the seat in the direction of travel (5) and respectively in transverse direction each comprise guide elements (44a,44b,46a,46b; 48a,48b,50a,50b) consisting of at least two cooperating parts of which respectively one part (46a,46b;48a,48b) is fastened in a stationary manner to the intermediate plate (14) and the respective other part (44a,44b; 50a,50b) is fastened in a stationary manner to the seat console (4) and the seat rotating device (8), respectively.

11. The seat according to claim 10, **characterized in that** the part (48a, 48b) of said device (40) for displacing the seat (1) in the direction of travel (5) that is fastened in a stationary manner to the intermediate plate (14) is fastened to the bottom side of the intermediate plate (14) and that the part (46a,46b) of said device (6) for lateral displacement of the seat (1) that is fastened in a stationary manner to the intermediate plate (14) is fastened to the top side of the intermediate plate (14).

12. The seat according to claim 8, **characterized in that** the contour (24) of the slotted stopper guide (16) is formed by a cutout (52) in the intermediate plate (14).

13. The seat according to claim 1 or 2, **characterized in that** the stop limiter device (10) is operative to detect, with the aid of sensors, the rotational angle of the seat (1) and the set position of the lateral displacement of the seat (1) and, with the aid of an electronically controllable blocking device (54) acting on the seat rotating device (8), to delimit the maximum allowable rotational angle of the seat (1) in both directions of rotation, which rotational angle can be read from a memory in dependence on the rotational angle and the displacement position.

14. The seat according to claim 13, **characterized in that**, for a case where the seat (1) shall be rotated or laterally displaced beyond a stopper, the stop limiter device is operable to control a linear drive for said device (6) for lateral displacement of the seat (1) or a rotary drive for the seat rotating device (8) in such a manner that, in case of a desired rotation beyond the stopper, the seat (1) is automatically displaceable in transverse direction and, in case of a desired movement beyond of the stop limitation for transverse displacement, the seat (1) can be automatically rotated back, so that the seat (1) always remains in the allowable positional range predefined by the stop limiter device.

15. A construction machine, particularly a road construction machine, comprising a seat according to any one of claims 1 to 14.

## Revendications

1. Siège (1), destiné à un engin de construction (2), comprenant un support de siège (4), un dispositif (6) de coulissement latéral du siège (1) dans la direction transversale par rapport au sens de déplacement (5) de l'engin de construction, et un dispositif de rotation de siège (8),
**caractérisé en ce qu'**un moyen de limitation par butée (10) limite de manière différente l'angle de rotation maximal autorisé du siège (1) en fonction de la position réglée du coulissement latéral du siège (1).

2. Siège selon la revendication 1, **caractérisé en ce que** le moyen de limitation par butée comporte ou prescrit par voie électronique, des positions de butée différentes (10) pour une rotation à gauche ou à droite du siège (1).

3. Siège selon la revendication 1 ou 2, **caractérisé en ce que** le moyen de limitation par butée (10) comporte une coulisse de butée (16) et un moyen de butée (20) coopérant avec la coulisse de butée (16).

4. Siège selon la revendication 3, **caractérisé en ce que** le moyen de limitation par butée (10) est disposé entre le dispositif de rotation de siège (8) ou le dispositif (6) de coulissement latéral du siège (1) et le support de siège (4).

5. Siège selon la revendication 3 ou 4, **caractérisé en ce que** la coulisse de butée (16) est formée par un contour (24) contre lequel le moyen de butée (20) bute en fonction de la position de siège latérale et de la position de rotation de siège actuelle en différents emplacements lorsque l'angle de rotation du siège (1) est limité.

6. Siège selon la revendication 5, **caractérisé en ce que** le contour (24) de la coulisse de butée (16) comporte au moins une ligne de limitation (25a, 25b) destinée à la rotation à gauche et une ligne de limitation (26) destinée à la rotation à droite.

7. Siège selon l'une des revendications 3 à 6, **caractérisé en ce que** la coulisse de butée (16) est accouplée au support de siège (4) et le moyen de butée (20) est accouplé à la partie rotative du siège (1).

8. Siège selon l'une des revendications 5 à 7, **caractérisé en ce que** le contour (24) de la coulisse de butée (16) est formé dans ou sur une plaque intermédiaire (14) dans laquelle s'engage le moyen de butée (20).

9. Siège selon l'une des revendications 1 à 8, **caractérisé en ce qu'**un dispositif (40) de coulissement du siège dans le sens de déplacement (5) de l'engin de construction (2) est disposé au niveau du support de siège (4) entre le moyen de limitation par butée (10) et le support de siège (4).

10. Siège selon la revendication 9, **caractérisé en ce que** les dispositifs (6, 40) de coulissement du siège dans le sens de déplacement (5) ou dans la direction latérale comportent chacun des éléments de guidage (44a, 44b, 46a, 46b ; 48a, 48b, 50a, 50b) constitués de deux parties coopérant l'une avec l'autre, dont une partie (46a, 46b ; 48a, 48b) est fixée de manière stationnaire à la plaque intermédiaire (14) et l'autre partie (44a, 44b, 50a, 50b) est fixé de manière stationnaire au support de siège (4) ou au dispositif de rotation de siège (8).

11. Siège selon la revendication 10, **caractérisé en ce que** la partie (48a, 48b), fixée de manière stationnaire à la plaque intermédiaire (14), du dispositif (40) de coulissement du siège (1) dans le sens de déplacement (5) est fixé au côté inférieur de la plaque intermédiaire (14) et **en ce que** la partie (46a, 46b), fixée à la plaque intermédiaire (14), du dispositif (6) de coulissement latéral du siège (1) est fixée au côté supérieur de la plaque intermédiaire (14).

12. Siège selon la revendication 8, **caractérisé en ce que** le contour (24) de la coulisse de butée (16) est formé par un évidement (52) ménagé dans la plaque intermédiaire (14).

13. Siège selon la revendication 1 ou 2, **caractérisé en ce que** le moyen de limitation par butée (10) détecte l'angle de rotation du siège (1) et la position réglée du coulissement latéral du siège (1) à l'aide de capteurs et limite l'angle de rotation maximale autorisée du siège (1), qui peut être lu dans une mémoire en fonction de l'angle de rotation et de la position de coulissement, dans les deux sens de rotation à l'aide d'un moyen de blocage (54) commandable électroniquement et agissant sur le dispositif de rotation de siège (8).

14. Siège selon la revendication 13, **caractérisé en ce que**, dans le cas où il faut faire tourner ou coulisser transversalement le siège (1) au-delà d'une limitation par butée, le moyen de limitation par butée actionne l'entraînement linéaire du dispositif (6) de coulissement latéral du siège ou un entraînement en rotation du dispositif de rotation de siège (8) de sorte que, dans le cas d'une rotation souhaitée au-delà de la butée, le siège (1) peut coulisser transversalement de manière automatique et, dans le cas d'un dépassement souhaité d'une butée pour effectuer un coulissement transversal, le siège (1) peut tourner en arrière automatiquement de sorte que le siège (1) reste toujours dans la gamme de positions autorisées prescrite par le moyen de limitation par butée.

15. Engin de construction, en particulier engin de construction de routes, comprenant un siège selon l'une des revendications 1 à 14.
